# EUROPÄISCHE PATENTSCHRIFT

(11) **EP 1 313 790 B1**
(45) Veröffentlichungstag und Bekanntmachung des Hinweises auf die Patenterteilung: **22.03.2006**
(21) Anmeldenummer: 01974157.8
(22) Anmeldetag: 10.08.2001
(51) Int. Cl.: C08G 64/30, C08G 64/20, C08G 64/04, B01D 3/00

(54) **REAKTIVREKTIFIKATION**
REACTIVE RECTIFICATION
RECTIFICATION REACTIVE

(30) Priorität: 23.08.2000 DE 10052874
(43) Veröffentlichungstag der Anmeldung: 28.05.2003
(73) Patentinhaber: Bayer MaterialScience AG, 51368 Leverkusen (DE)
(72) Erfinder: JOHN, Gerald, Baytown TX 77520 (US); DIKOW, Edmund, 51065 Köln (DE); MENDOZA-FROHN, Christine, 40699 Erkrath (DE); RONGE, Georg, 40549 Düsseldorf (DE); BACHMANN, Rolf, 51469 Bergisch Gladbach (DE); GOTTSCHALK, Lutz, CH-8610 Uster (CH); PREIN, Michael, B-2930 Braschaat (BE)
(86) Internationale Anmeldenummer: PCT/EP2001/009246
(87) Internationale Veröffentlichungsnummer: WO 2002/016469

(56) Entgegenhaltungen:
- EP-A- 0 684 221
- DE-A- 4 104 691
- US-A- 5 523 451
- "Ullmann's Encyclopedia of Industrial Chemistry, Fifth Ed., Vol. B4, pp 321-328" , VCH PUBLISHERS XP002184035 Seite 321, rechte Spalte -Seite 323, rechte Spalte, Zeile 9 Seite 327, linke Spalte, Absatz 2 -Seite 327, rechte Spalte

## Beschreibung

Die Anmeldung betrifft ein Verfahren zur Herstellung von Polycarbonat nach dem Schmelzeumesterungsverfahren unter Einsatz der Reaktivrektifikation.

Die Herstellung von Polycarbonaten durch Schmelzeumesterung erfolgt durch Umsetzung von Bisphenolen [Bis-(Hydroxyaryl)verbindungen], bevorzugt Bisphenol A, mit Diarylcarbonaten, bevorzugt Diphenylcarbonat, unter Abspaltung der Hydroxyarylkomponente aus dem Kohlensäurediester; beim Einsatz von Diphenylcarbonat wird Phenol abgespalten. Durch fortgesetzte kontinuierliche oder diskontinuierliche Entfernung der Hydroxyarylkomponente, beispielsweise Phenol, wird das Reaktionsgleichgewicht verschoben und die Bildung hochmolekularer Polycarbonate ermöglicht. Hierbei unterscheidet man im allgemeinen zwischen den sogenannten Niedrigviskosstufen zu Beginn der Reaktion, bei denen PolycarbonatOligomere gebildet werden und ein Großteil des freiwerdenden Hydroxyaryls abgetrennt wird, und den sogenannten Hochviskosstufen, bei denen zu Ende der Reaktion unter Verwendung spezieller oberflächenbildender Apparate hochviskose Polycarbonate erhalten werden. Die Hydroxyarylabtrennung in den Niedrigviskosstufen erfolgt im allgemeinen destillativ. Bekannt ist die Verwendung eines Rührkessels mit aufgesetzter Destillationskolonne. Nachteil dieses Vorgehens ist, dass das Verfahren batchweise und nicht destillativ durchgeführt wird und dass die langen Verweilzeiten im Rührkessel zu einer Schädigung des Produkts führen können. Alternativ kann die Hydroxyarylabtrennung in einer mehrstufigen Verdampferkaskade, z.B. Fallfilmverdampfer erfolgen. Nachteile dieses kontinuierlichen Prozesses bestehen darin, dass bei der Flash-Verdampfung in diesen Apparaten ebenfalls größere Mengen Diphenylcarbonat aus der Reaktionsmischung abdestilliert werden und dass die Verdampferkaskade einen hohen apparativen und technischen Aufwand bedingt.

Aufgabe war daher ein einfacheres Verfahren zur Herstellung von Polycarbonat nach dem Schmelzeumesterungsverfahren durch Umsetzung von Diarylcarbonaten (DAC) mit Bisphenolen [Bis-(Hydroxyaryl)verbindungen] zu finden.

Es wurde nun überraschenderweise gefunden, dass man die Niedrigviskosstufe mit Reaktivrektifikationsreaktoren, insbesondere nur einem Reaktivrektifikationsreaktor durchführen kann. Dadurch werden apparative Vereinfachungen, geringere Verweilzeiten und folglich geringere Produktbelastung durch effektiveren Hydroxyarylaustrag, eine bessere Beeinflussbarkeit der Produktqualität über das Verhältnis von in einer Vorreaktionseinheit zugeführten DAC zu dampfförmig zugeführten DAC, und eine Absenkung des DAC-Überschusses gegenüber der Fallfilmverdampferkaskade mit folglich reduzierten Kreislaufströmen, ermöglicht.

Gegenstand der Erfindung ist daher ein Verfahren zur Herstellung von PolycarbonatOligomeren durch Umsetzung von Bis-(Hydroxyaryl)-Verbindungen (Bisphenolen) und Diarylcarbonaten (DAC) unter Abspaltung der Hydroxyarylkomponente aus den DAC und unter Einleitung von reinem DAC-Dampf im Gegenstrom zu dieser Vorreaktionsmischung. Vorzugsweise kommen als Bisphenolkomponenten 2,2-Bis-(4-hydroxyphenyl)propan (BPA), 1,1-Bis-(4-hydroxyphenyl)-3,3,5-trimethylcyclohexan, 4,4`-Dihydroxybiphenyl oder 1,3-Bis-(1-(4-hydroxyphenyl)-1-methylethyl)-benzol einzeln oder als Mischungen zum Einsatz. Besonders bevorzugt kommen BPA als Bisphenolkomponente und Diphenylcarbonat als Diarylcarbonatkomponente zum Einsatz.

Vorzugsweise wird die Vorreaktionsmischung im oberen Teil (2) einer Reaktionseinheit (1) und der DAC-Dampf im unteren Teil (3) der Reaktionseinheit (1) eingeleitet.

Das bei der Umsetzung von Bis-(Hydroxyaryl)verbindungen mit DAC entstehende Hydroxyaryl wird aus der Reaktionseinheit, vorzugsweise am Kopf (13) der Einheit, ausgetragen. Der Partialdruck des Hydroxyaryls beträgt im DAC Einleitungsteil (3) null. Da das entsprechende Hydroxyaryl im Vergleich zu DAC ein Leichtsieder ist, wird es aus der flüssigen Phase destillativ verdrängt und durch DAC aus der Dampfphase ersetzt. Hierbei reichert sich der Dampfstrom bei der bevorzugten Verfahrensweise von unten nach oben kontinuierlich mit Hydroxyaryl an und DAC gelangt zunehmend in die Flüssigphase und steht dort für die Reaktion zur Verfiigung. Die gesamte für die Verdampfung des in der Kolonne gebildeten Hydroxyaryls erforderliche Energie wird in der bevorzugten Ausführungsform durch das dampfförmige DAC eingebracht, somit also durch einen Verdampfer (4), der mit dem Polycarbonat nicht in Kontakt kommt. Auf die Zufuhr von Energie durch heiße Verdampferflächen, die direkt mit dem Reaktionsprodukt in Kontakt kommen, kann daher verzichtet werden.

Die Vorkondensation wird vorzugsweise in einer separaten Vorreaktionseinheit (5) durchgeführt. Dabei wird die Vorreaktionseinheit mit hohem DAC-Unterschuß betrieben und in der Reaktivrektifikationskolonne ständig DAC durch die Dampfphase nachgeführt. Das in der Vorreaktionseinheit gebildete Hydroxyaryl kann zum Teil durch Abflashen in der Kolonne oder durch Teilverdampfung schon in der Vorreaktionseinheit (5) verdampft werden.

Natürlich ist es alternativ möglich, für die verbesserte Hydroxyarylverdampfung oder zur Regelung über Verdampferflächen im Sumpf oder durch Wärmetauscher in der Kolonne zwischen den Stoffaustauschelementen zusätzliche Energie in die Kolonne einzubringen.

Anstatt der Einleitung der gesamten DAC-Menge unten in die Reaktionszone kann dieser Strom auch aufgesplittet werden und teilweise an einer oder mehreren Stellen im mittleren Bereich der Reaktionszone eingeleitet werden.

Vorzugsweise wird anschließend an diese Reaktivrektifikation, zur Durchführung der Endumsetzung eine abschließende Fallfilmverdampfereinheit (9) nachgeschaltet, die bei gegenüber der Reaktivkolonne reduziertem Druck betrieben wird und die über einen separaten Kondensator (12) verfügt. Es kann aber auch ohne oder mit mehreren Verdampfereinheiten gearbeitet werden. Auch hier kann - wie nachfolgend für die Kolonne beschrieben- gegebenenfalls ein Verstärkerteil (10), bestehend aus Kondensator (12) und Verstärkungskolonne (11), betrieben werden um die anfallenden Nebenprodukt-Brüdenströme aufzukonzentrieren.

Natürlich kann die abschließende Fallfilmverdampfereinheit auch mit gleichem Druck wie die Reaktivrektifikationskolonne betrieben werden. In diesem Falle kann auf die separate Brüdenkondensation verzichtet werden, da die Brüden direkt am Fuß der Reaktivrektifikation eingeleitet werden.

Es ist durchaus möglich, die Enthalpie des dampfförmig am Kopf der Reaktivkolonne bzw. aus dem abschließenden Fallfilmverdampfer austretenden Hydroxyaryls zu dessen Reindarstellung zu nutzen. Hierbei werden z.B. wie nachfolgend beschrieben zusätzliche Energie und Apparate eingespart:
- Gegebenenfalls wird die Reaktivrektifikationskolonne mit einem Verstärkerteil (6) zur Aufkonzentrierung des entweichenden Hydroxyaryls betrieben. Am Kopf wird das Hydroxyaryl in einer Kondensationseinheit (8) kondensiert und in Abhängigkeit eines von der geforderten Reinheit wählbaren Rücklaufverhältnis teilweise entnommen. Dadurch kann die über das DAC eingebrachte Energie neben der Hydroxyarylabtrennung auch für die Hydroxyarylreinigung genutzt werden. Der Rücklauf wird auf die Verstärkungskolonne (7) zurückgefahren. Der unten aus dem Verstärkerteil austretende Flüssigkeitsstrom wird ganz oder teilweise entnommen und kann - ggf. zusammen mit den kondensierten Brüden des abschließenden Fallfilmverdampfers - einer separaten mengenmäßig deutlich kleineren Aufarbeitung zugeführt werden.
- Alternativ können die Brüden aus dem abschließenden Fallfilmverdampfer und der Reaktivkolonne auf dem niedrigeren Druckniveau, also im allgemeinen auf dem Druckniveau des abschließenden Fallfilmverdampfers, vereint werden. Dieser vereinte Brüdenstrom wird einer separaten Aufarbeitungskolonne dampfförmig zugeführt werden. U.U. können auch die Zuspeisestellen für die einzelnen Brüdenströme an unterschiedlichen Stellen dieser Aufarbeitungskolonne liegen.

Werden homogene Katalysatoren verwendet, so werden diese ganz oder teilweise in der Vorreaktionseinheit eingeleitet. Der verbleibende Anteil wird direkt oberhalb oder auch an tieferer Stelle in den Reaktionsteil der Kolonne eindosiert. Schwersiedende oder unflüchtige Katalysatoren werden bevorzugt, da ein Übergang in die Gasphase zu Problemen im gegebenenfalls installierten destillativen Kopfteil führen kann. Als homogen gelöste Katalysatoren können geeignete lösliche basische Verbindungen wie beispielsweise Alkali- oder Erdalkalihydroxide oder -carbonate oder N- oder P-haltige basische organische Verbindungen verwendet werden. Bevorzugt kommen basische quartäre Ammonium- oder Phosphoniumsalze wie beispielsweise Tetraalkylammoniumhydroxide oder Tetraarylphosphoniumphenolate zum Einsatz. Es können hierbei herkömmliche Stoffaustauschelemente als Kolonneneinbauten verwendet werden, wobei neben einem intensiven Stoffaustausch zwischen Dampf und Flüssigkeit auch eine ausreichend lange Verweilzeit für den Ablauf der Reaktion zu gewährleisten ist. Geeignet sind entsprechend verschiedene, dem Fachmann bekannte Kolonnenböden oder geordnete bzw. ungeordnete Packungen. Bevorzugt können hier Glocken- oder Verweilzeitböden sowie Blechpackungen eingesetzt werden.

Werden feste Katalysatoren verwendet, so werden diese in der dem Fachmann bekannten Art in die Stoffaustauschelemente wie z.B. in geordnete oder ungeordnete katalytische Packungen mit einer Gewebestruktur zur Aufnahme heterogener Katalysatoren oder aber in spezielle Vorrichtungen in Destillationsböden eingebracht. Beispiele für solche Kolonneneinbauten werden in den Patentschriften EP-A 670 178; EP-A 461 855; US-A 5 026 459; US-A 4 536 373; WO 94/08681; WO 94/08682; EP-A 470 655; WO 97/26971; US-A 5 308 451; EP-A 755 706; EP-A 781 829; EP-A 428 265; EP-A 448 884; EP-A 640 385; EP-A 631 813; WO 90/02603; WO 97/24174; EP-A 665 041; EP-A 458 472; EP-A 476 938 beschrieben.

Als feste Katalysatoren können Metalloxide oder beispielsweise feste basische Anionenaustauscherharze verwendet werden.

Die Temperatur des dampfförmig zugeführten DAC liegt zwischen der Siedetemperatur des DAC beim eingestellten Kolonnendruck und 300 °C, besonders bevorzugt bis 270 °C.

Die Temperatur des flüssig ggf. aus einer Vorreaktionseinheit zugeführten Gemisches liegt zwischen 100 und 250 °C, besonders bevorzugt zwischen 140 und 210 °C.

Die Temperatur in der Kolonne stellt sich abhängig vom gewählten Druck und von den gewählten Zulaufbedingungen ein und liegt zwischen 130 und 230 °C im Bereich des flüssigen Zulaufes und zwischen 180 und 270 °C im unteren Bereich der Kolonne.

Die Temperatur im abschließenden Fallfilmverdampfer kann über den reduzierten Druck separat eingestellt werden und liegt zwischen 180 °C und 320 °C, besonders bevorzugt zwischen 200 und 290 °C.

Der am oberen Ende des Reaktionsabschnittes in der Kolonne eingestellte Druck liegt zwischen 20 und 500 mbar, besonders bevorzugt zwischen 30 und 200 mbar. Der gewählte Druck wirkt sich insbesondere auf die Temperaturen und damit auf Reaktionsgeschwindigkeit und Produktqualität sowie über die Temperatur auf die Viskosität und damit auf die Fluiddynamik in der Kolonne aus.

Der im abschliessenden Fallfilmverdampfer einzustellende Druck richtet sich nach den bei guter Produktqualität zulässigen Temperaturen und liegt zwischen 5 und 200 mbar, besonders bevorzugt zwischen 10 und 60 mbar.

Das molare Verhältnis der insgesamt (also in der Vorreaktionseinheit und dampfförmigem Zulauf) in der Vorreaktionseinheit und der Reaktivkolonne zugeführten DAC Menge zur Bis(hydroxyaryl)-Verbindungen-Menge beträgt 0,95 bis 1,5, besonders bevorzugt 1,0 bis 1,2.

Es werden 0 % bis 60 %, besonders bevorzugt 2 % bis 30 % des gesamten DAC-Zulaufes in der Vorreaktionseinheit zugeführt. Der Rest wird der Kolonne über den dampfförmigen Zulauf zugeführt. Der Fall 0 % DAC entspricht einer Kolonne ohne Vorreaktionseinheit, in welche die vorgewärmte Bis-(Hydroxyaryl)verbindung eintritt.

Der größere Teil des insgesamt gebildeten Hydroxyaryls wird in der Kolonne abgeflasht bzw. durch dampfförmiges DAC ausgetrieben. Das Verhältnis des im abschließenden Fallfilmverdampfer ausgetriebenen Hydroxyaryls zum insgesamt gebildeten Hydroxyaryl liegt bei 0,1 % bis 20 %, besonders bevorzugt bei 0,1 % bis 10 %.

Typische Verweilzeiten in der Vorreaktionseinheit liegen bei 1 min. bis 60 min., besonders bevorzugt bei 1 min. bis 15 min.

Mittlere Verweilzeiten des Reaktionsgemisches in der Kolonne liegen bei 3 min. bis 80 min., besonders bevorzugt bei 5 min. bis 30 min.

Verweilzeiten im abschließenden Fallfilmverdampfer incl. zugehöriger Pumpenvorlagen liegen bei 2 bis 50 min., besonders bevorzugt bei 5 bis 25 min.

Auf diesem Wege werden Polycarbonatoligomere erhalten, die eine relative Lösungsmittelviskosität etaᵣₑₗ (gemessen an einer 5 g Polymer/l enthaltenden Lösung in Dichlormethan bei 25 °C) von 1,05 bis 1,10 bevorzugt 1,06 bis 1,08 aufweisen. Der Gewichtsanteil der phenolischen OH-Endgruppen X_{PhOH} in den erhaltenen Polycarbonatoligomeren beträgt 4000 - 10000 ppm, bevorzugt 5000 - 7000 ppm. Die so erhaltenen Produkte können als Präpolymere zur Herstellung von farbhellem und lösungsmittelfreiem Polycarbonat genutzt werden, wie beispielsweise in EPA 719 814 oder EPA 694572 beschrieben. Hierzu werden die Präpolymere, gegebenfalls unter Zusatz eines geeigneten Katalysators, unter fortgesetzter Abspaltung der Hydroxyarylverbindung aus der Diarylkomponenten zu hochmolekularen Polycarbonatpolymeren aufkondensiert.

Das nachfolgende Beispiel soll die vorliegende Erfindung illustrieren, ohne sie einschränken zu wollen.

### Beispiel

In einen Vorreaktionseinheit werden 24,2 kg/h Gemisch aus 94,4 gew.-% BPA, 5,6 gew.% DPC und bezogen auf BPA 1,5 10⁻³ mol-% Tetraphenylphosphoniumphenolat als Katalysator eingeleitet und erwärmt und bei 190 °C in einer Vorreaktion zu Polycarbonat (PC) umgesetzt. Die Verweilzeit im Vorreaktionseinheit betrug ca. 3 min. Die so erhaltene Phenol/BPA/DPC/PC Mischung wird am Kopf einer Reaktionskolonne eingeleitet. Ein Teil des im Vorreaktionseinheit gebildeten Hydroxyaryls flasht dabei ab. Die Temperatur in der Reaktionskolonne um die Einleitstelle liegt bei ca. 190 °C. In einem seitlichen Fallfilmverdampfer wird reines DPC verdampft und bei einer Temperatur von 230 °C am Fuß der Reaktionskolonne mit einer Einleitgeschwindigkeit von 22,7 kg/h in die Reaktionskolonne eingeleitet.

Die Reaktionskolonne hat einen Durchmesser von 100 mm und ist mit einer konventionellen Blechpackung mit 350 m²/m³ ausgerüstet. Die Packungshöhe beträgt insgesamt 13 m. An drei Stellen wird die Flüssigkeit gesammelt und neu verteilt. Die Reaktionskolonne ist durch einen adiabatischen Mantel isoliert. Die Kolonne wird bei 100 mbar betrieben. Der Druck wird direkt oberhalb der Reaktionszone gemessen. Zur Überwachung des Temperaturprofils sind in der Reaktionskolonne von unten nach oben nach ca. 1,5 m und nach 13 m Packung Temperaturmessstellen angebracht. Die Temperatur an der Messstelle nach 1,5 m liegt bei 232 °C, die an der obersten Messstelle beträgt 191 °C. Die Verweilzeit in der Reaktionskolonne beträgt ca. 10 Minuten.

Unten aus der Reaktionskolonne wird die Reaktionsflüssigkeit entnommen und zur Umsatzvervollständigung in einen 1,0 m² Fallfilmverdampfer eingeleitet. Der Fallfilmverdampfer und dessen Sumpfvorlage werden bei 25 mbar und 272 °C betrieben. Aus dem Fallfilmverdampfer können 27,1 kg/h flüssiges Produkt bestehend aus Polycarbonatoligomeren entnommen werden. Das Produkt ist charakterisiert durch die Werte etaᵣₑₗ =1.063 und x_{PhOH} = 6030 ppm. In einem separaten Kondensator werden insgesamt 3,3 kg/h Brüden des Fallfilmverdampfers kondensiert, der hauptsächlich aus DPC und Phenol besteht.

Der aus der Kolonne austretende Brüden wird durch einen leeren 1 m Glasschuss mit 100 mm Durchmesser auf eine Kondensator geleitet. Der Glassschuss ist ebenfalls mit adiabatem Mantel versehen. Im darüber installierten Kondensator, der mit einer kühlmittelseitigen Temperatur von 50 °C betrieben wird, werden 16,4 kg/h Brüden kondensiert. Das Kondensat enthält ca. 98 gew.-% Phenol. Auf einen Verstärkerteil mit Stoffaustauschelementen wird im Labor verzichtet.

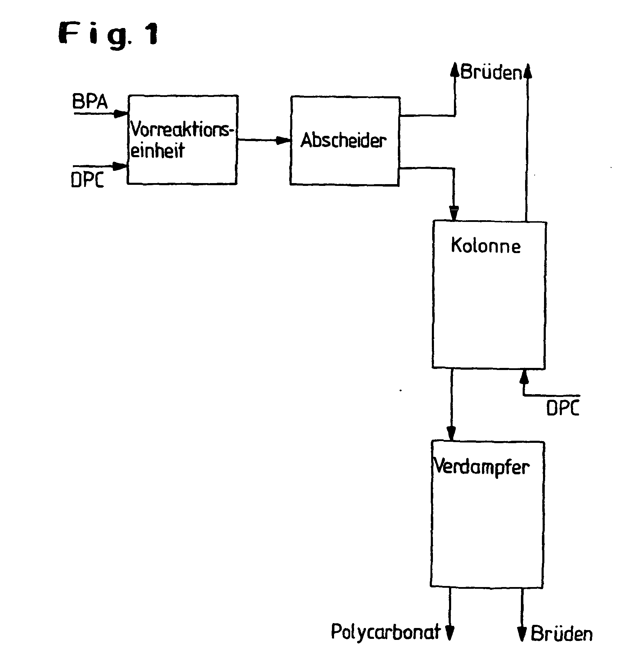

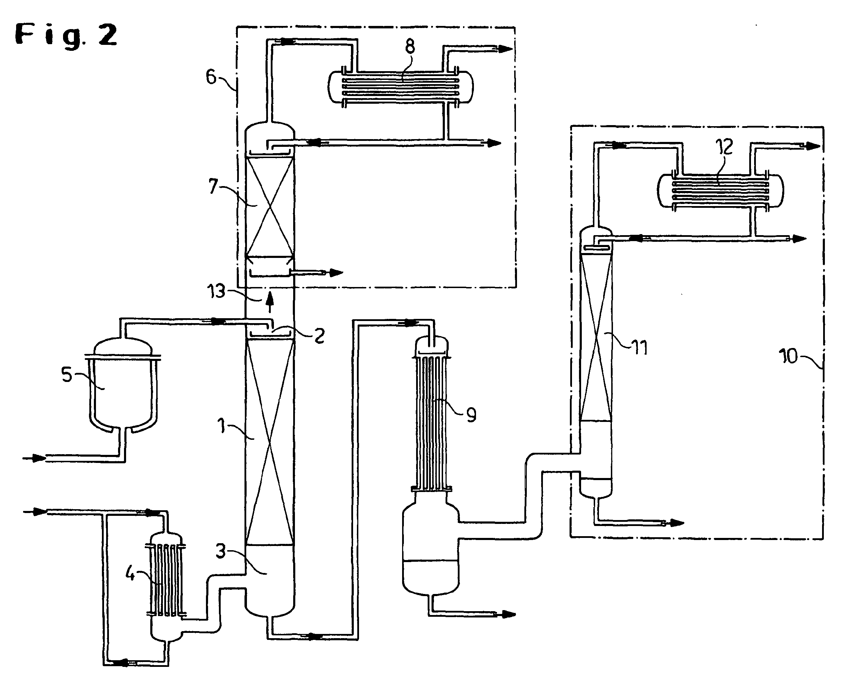

## Patentansprüche

1. Verfahren zur Herstellung von Polycarbonat, **dadurch gekennzeichnet, dass** Bis-(Hydroxyaryl)verbindungen und Diarylcarbonate (DAC) unter Abspaltung des entsprechenden Hydroxyaryls aus DAC in einer Vorreaktion umgesetzt werden und anschließend reiner DAC-Dampf im Gegenstrom zu dieser Vorreaktionsmischung eingeleitet wird.

2. Verfahren gemäß Anspruch 1, **dadurch gekennzeichnet, dass** Bisphenol A und Diphenylcarbonte als Ausgangsstoffe eingesetzt werden.

3. Verfahren gemäß Anspruch 1, **dadurch gekennzeichnet, dass** die Temperatur des dampfförmig zugeführten Diarylcarbonats (DAC) zwischen der Siedetemperatur des DAC beim eingestellten Kolonnendruck und 300°C liegt.

4. Verfahren gemäß Anspruch 3, **dadurch gekennzeichnet, dass** die Temperatur des dampfförmig zugeführten Diarylcarbonats (DAC) zwischen der Siedetemperatur des DAC beim eingestellten Kolonnendruck und 270°C liegt.

5. Verfahren gemäß einem der vorhergehenden Ansprüche, **dadurch gekennzeichnet, dass** die Temperatur des flüssig zugeführten Gemisches zwischen 100 und 250°C liegt.

6. Verfahren gemäß Anspruch 5, **dadurch gekennzeichnet, dass** die Tenperatur zwischen 140 und 210°C liegt.

7. Verfahren gemäß einem der vorhergehenden Ansprüche, **dadurch gekennzeichnet**, das das molare Verhältnis der insgesamt zugeführten DAC-Menge zur Menge der Bis(hydroxyaryl)-Verbindungen 1,0 bis 1,2 beträgt.

8. Verfahren gemäß einemoder mehreren der vorhergehenden Ansprüche, wobei als Katalysatoren basische quartäre Ammonium- oder Phosphoniumsalze eingesetzt werden.

9. Verfahren gemäß einem oder mehreren der vorhergehenden Ansprüche zur Herstellung von Polycarbonat mit einer relativen Lösungsviskosität (gemessen an einer 5 g Polymer/l enthaltenden Lösung in Dichlormethan bei 25°C) von 1,05 bis 1,10 und der Gewichtsanteil der phenolischen OH-Endgruppen 4 000 - 10 000 ppm beträgt.

## Claims

1. A process for the production of polycarbonate, **characterised in that** bis(hydroxyaryl) compounds and diaryl carbonates (DAC) are reacted in a pre-reaction with elimination of the corresponding hydroxyaryl from DAC and pure DAC vapour is then introduced countercurrently to this pre-reaction mixture.

2. A process according to claim 1, **characterised in that** bisphenol A and diphenyl carbonates are used as starting materials.

3. A process according to claim 1, **characterised in that** the temperature of the diaryl carbonate (DAC) supplied in vapour form is between the boiling point of the DAC at the prevailing column pressure and 300°C.

4. A process according to claim 3, **characterised in that** the temperature of the diaryl carbonate (DAC) supplied in vapour form is between the boiling point of the DAC at the prevailing column pressure and 270°C.

5. A process according to any one of the preceding claims, **characterised in that** the temperature of the mixture supplied in liquid form is between the 100 and 250°C.

6. A process according to claim 5, **characterised in that** the temperature is between 140 and 210°C.

7. A process according to any one of the preceding claims, **characterised in that** the molar ratio of the total quantity of DAC supplied to the quantity of the bis(hydroxyaryl) compounds is 1.0 to 1.2.

8. A process according to one or more of the preceding claims, wherein basic quaternary ammonium or phosphonium salts are used as catalysts.

9. A process according to one or more of the preceding claims for the production of polycarbonate with a relative solution viscosity (measured on a solution in dichloromethane containing 5 g of polymer per litre at 25°C) of 1.05 to 1.10 and the proportion by weight of the phenolic OH terminal groups is 4000-10000 ppm.

## Revendications

1. Procédé de production de polycarbonate, **caractérisé en ce que** l'on fait réagir des composés bis-hydroxyaryliques et des diarylcarbonates (DAC) dans une préréaction où l'hydroxyaryle correspondant est séparé du DAC, et que de la vapeur de DAC pure est ensuite acheminée à contre-courant à ce mélange préréactionnel.

2. Procédé selon la revendication 1, **caractérisé en ce que** du bisphénol A et des diphénylcarbonates sont mis en oeuvre comme matières de départ.

3. Procédé selon la revendication 1, **caractérisé en ce que** la température du diarylcarbonate (DAC) acheminé sous forme de vapeur est comprise entre la température d'ébullition du DAC à la pression de colonne ajustée et 300 °C.

4. Procédé selon la revendication 3, **caractérisé en ce que** la température du diarylcarbonate (DAC) acheminé sous forme de vapeur est comprise entre la température d'ébullition du DAC à la pression de colonne ajustée et 270 °C.

5. Procédé selon une des revendications précédentes, **caractérisé en ce que** la température du mélange acheminé sous forme liquide est comprise entre 100 et 250 °C

6. Procédé selon la revendication 5, **caractérisé en ce que** la température est comprise entre 140 et 210 °C.

7. Procédé selon une des revendications précédentes, **caractérisé en ce que** le rapport molaire entre la proportion totale de DAC acheminée et celle des composés bishydroxyaryliques est compris entre 1,0 et 1,2.

8. Procédé selon une ou plusieurs des revendications précédentes, dans lequel des sels basiques d'ammonium ou du phosphonium quaternaire sont mis en oeuvre comme catalyseurs.

9. Procédé selon une ou plusieurs des revendications précédentes pour la production de polycarbonate présentant une viscosité en solution relative (déterminée sur une solution contenant 5 g de polymère par litre dans du dichlorométhane à 25 °C) comprise entre 1,05 et 1,10, et la proportion en poids des groupes terminaux OH phénoliques atteignant 4 000 à 10 000 ppm.
